**Europäisches Patentamt**

**European Patent Office**

**Office européen des brevets**

(19)

(11) Numéro de publication: **0 020 212**
**B1**

(12)

# FASCICULE DE BREVET EUROPEEN

(45) Date de publication du fascicule du brevet: **31.08.83**

(21) Numéro de dépôt: **80400632.8**

(22) Date de dépôt: **09.05.80**

(51) Int. Cl.³: **B 41 J 11/14,**
**G 01 D 15/24, B 41 J 3/20**

(54) **Dispositif d'impression à déplacement transversal d'un support d'impression appliqué sur un rouleau par rapport à une tête d'impression.**

(30) Priorité: **31.05.79 FR 7914039**

(43) Date de publication de la demande:
**10.12.80 Bulletin 80/25**

(45) Mention de la délivrance du brevet:
**31.08.83 Bulletin 83/35**

(84) Etats contractants désignés:
**DE GB IT**

(56) Documents cités:
**FR - A - 1 459 411**
**FR - A - 2 300 678**
**FR - A - 2 368 361**
**US - A - 3 951 247**

(73) Titulaire: **ENERTEC SOCIETE ANONYME**
**12, Place des Etats-Unis**
**F-92120 Montrouge (FR)**

(72) Inventeur: **Vigneron, Hubert**
**10 rue Jules Guesde**
**F-92120 Montrouge (FR)**

(74) Mandataire: **Bentz, Jean-Paul**
**GIERS SCHLUMBERGER Service BREVETS 12,**
**place des Etats-Unis**
**F-92124 Montrouge Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Dispositif d'impression à déplacement transversal d'un support d'impression
appliqué sur un rouleau par rapport à une tête d'impression

La présente invention concerne un dispositif d'impression du genre défini dans le préambule de la revendication 1.

Un domaine d'application particulier non limitatif de l'invention est celui de l'impression ligne par ligne par peignes, la tête d'impression, ou peigne, comportant une série d'éléments alignés équidistants pouvant être sélectivement activés pour réaliser l'impression de points par percussion, par voie thermique, par voie chimique,... sur un support d'impression, par exemple un papier adapté à la technique d'impression utilisée.

Dans ce cas, il est connu (voir document US—A—3.951.247 et FR—A—2 300 678), pour l'impression de chaque ligne, de déplacer le peigne en direction transversale en formant des points d'impression. Le peigne peut être déplacé pour amener les éléments dans des positions successives à des intervalles d'une longueur égale à une fraction de l'intervalle entre deux éléments voisins. Une impression de points peut être effectuée dans chacune de ces positions. Le peigne peut à cet effet être déplacé pas à pas d'une position à la suivante, ou, de façon continue, l'impression étant alors réalisée à la volée. Dans les deux cas, on forme des points imprimés très proches les uns des autres et on obtient une bonne qualité d'impression. Après impression d'une ligne, on passe à la ligne suivante en faisant accomplir un pas de rotation au rouleau. L'activation des éléments du peigne est commandée pour obtenir l'information alphanumérique ou graphique souhaitée par assemblage de points.

Dans certaines applications où la tête d'impression comporte un nombre relativement élevé d'éléments d'impression alignés, il peut être cependant difficile d'effectuer un réglage fournissant une bonne uniformité d'impression sur toute le longueur d'une ligne dans toutes les positions du peigne. Ce réglage peut lui-même souffrir des vibrations continuelles de la tête représentées par son mouvement de va-et-vient rapide incessant en cours d'impression. Le peigne lui-même peut constituer un ensemble relativement délicat d'éléments qui doivent être entraînés dans ce mouvement de va-et-vient en regard du support d'impression et doivent donc posséder une très bonne tenue mécanique. Enfin, lorsque les éléments d'impression sont activés sous la commande de signaux électriques transmis au peigne, comme c'est le cas pour des éléments d'impression thermiques, la tête mobile doit être reliée électriquement à un dispositif de commande en général solidaire du bâti par des liaisons souples qui peuvent représenter un facteur de vulnérabilité de l'imprimante.

La présente invention a pour but de remédier à ces diverses sources de difficultés dans des imprimantes du type envisagé et de proposer une réalisation particulièrement simple de ces dernières.

A cet effet, il est proposé, conformément à l'invention, un dispositif d'impression du type defini à la revendication 1.

Dans le cas où le mouvement d'avance du support d'impression est effectué par la rotation d'une fraction de tour du rouleau, la disposition envisagée se prête particulièrement bien à la commande à partir d'une même source motrice du mouvement transversal du rouleau et du mouvement de rotation de ce dernier en fin de course transversale pour l'avancement longitudinal du support en vue de l'impression de la ligne suivante.

On sait que normalement tout mouvement relatif transversal entre le support d'impression et le rouleau doit être empêché pour obtenir des alignements corrects de l'impression selon des lignes verticales. A ces fins, le rouleau est par exemple revêtu d'un matériau de friction.

Cette solidarité entre le rouleau et le support est mise à profit, conformément à l'invention, pour déplacer transversalement le support d'impression par rapport à la tête d'impression en agissant sur le rouleau uniquement.

Dans certains types d'imprimantes, le support d'impression se présente sous forme d'une bande débitée à partir d'une bobine sur un rouleau débiteur et appliquée sur le rouleau d'appui par la tête d'impression elle-même. Cette disposition est usuelle sur les imprimantes à tête thermique dans lesquelles une série d'éléments d'impression résistifs sont en contact avec un papier thermosensible qu'ils sont susceptibles d'échauffer sélectivement pour y inscrire des marques, en général ponctuelles. Le rouleau débiteur peut tourner librement sur son axe et c'est le rouleau d'appui sur lequel est plaqué le support d'impression qui entraîne ce dernier longitudinalement au passage d'une ligne à la suivante. Le matériau de friction à la surface de ce dernier s'oppose au glissement du support par rapport à lui. Cette adhérence sur le rouleau d'appui peut être mise à profit pour entraîner également le support d'impression par un mouvement axial du rouleau.

Les têtes d'impression ne sont plus soumises à des vibrations, de même que les dispositifs connecteurs servant à leur commande et/ou à leur alimentation. En outre, le nombre de pièces en mouvement est réduit. Tout ceci concourt à accroître la fiabilité du système d'impression.

Le déplacement transversal alternatif est d'amplitude limitée, de préférence inférieure à 1 cm.

Ce déplacement peut être effectué pas à pas, chaque pas étant un sous-multiple du pas des éléments d'impression mesuré sur la tête d'impression parallèlement à l'axe du rouleau. L'entraînement est alors réalisé par exemple au moyen d'un moteur pas à pas.

Le déplacement transversal peut aussi être réalisé de façon continue, l'impression étant alors effectuée à la volée.

D'autres particularités et avantages du dispositif d'entraînement conforme à l'invention ressortiront à la lecture de la description faite ci-après, à titre indicatif mais non limitatif en référence aux dessins joints sur lesquels:

— la figure 1 est une vue très schématique en perspective d'un mode de réalisation d'un dispositif d'impression thermique conforme à l'invention,

— la figure 2 est une vue schématique de dessus illustrant les différentes positions de l'excentrique du dispositif représenté par la figure 1,

— la figure 3 illustre le profil développé d'une came du dispositif illustré par la figure 1,

— la figure 4 est une vue partielle en éclaté du dispositif d'accouplement entre l'excentrique et l'axe du rouleau dans le cas du dispositif d'entraînement illustré par la figure 1, et

— les figures 5 et 6 illustrent schématiquement les positions respectives d'un rouleau d'entraînement, d'une bande de papier et d'une tête d'impression du dispositif de la figure 1.

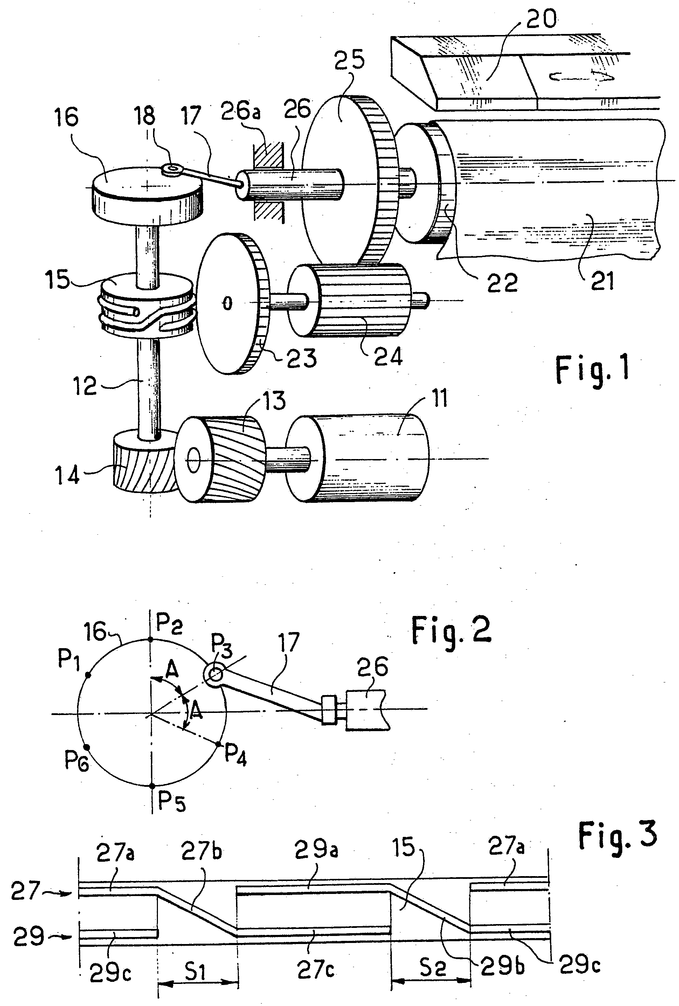

Sur la figure 1, on a représenté un moteur par à pas 11 d'axe horizontal qui entraîne en rotation un arbre vertical 12 par l'intermédiaire de pignons 13, 14 formant renvoi d'angle et réducteur.

Sur l'arbre 12 sont fixés, espacés l'un de l'autre, un organe d'actionnement en forme de came 15 et un disque 16.

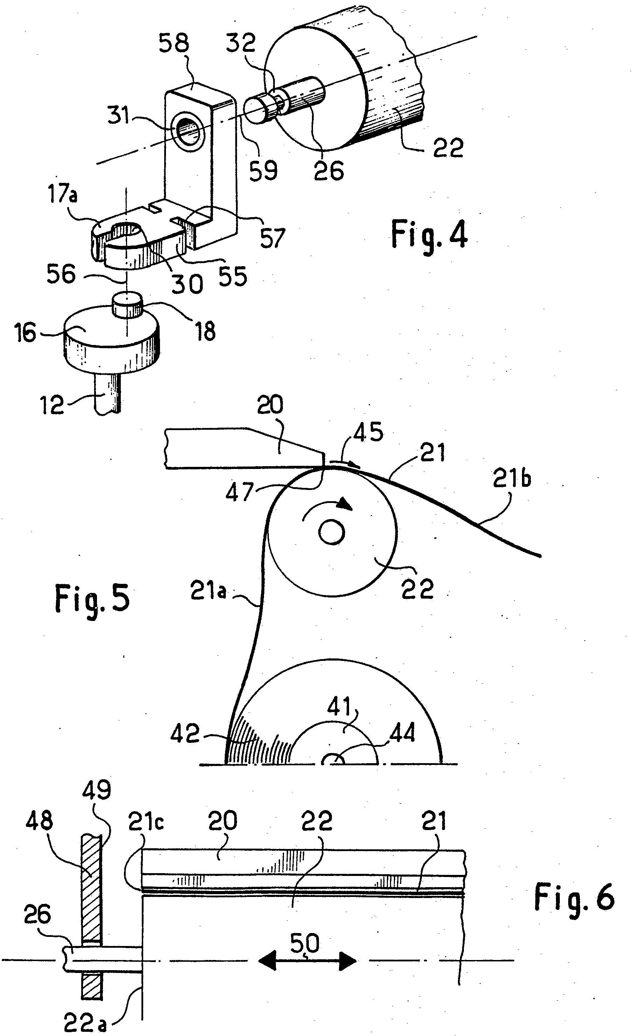

Une bielle 17 est, à une extrémité 17a (fig. 4) articulée sur un excentrique 18 porté par le disque 16, et, à l'autre extrémité, articulée à une extrémité longitudinale de l'arbre 26 d'un rouleau 22 d'appui et d'avance d'un support d'impression. Le moteur 11, les organes de transmission 12, 13, 23, 24, la came 15 et le système bielle-manivelle 16, 17, 18 sont montés sur un bâti non représenté. Le rouleau 22 peut coulisser horizontalement, parallèlement à son axe. L'arbre 26 est guidé dans des paliers 26a solidaires du bâti de l'imprimante.

Une ou plusieurs têtes d'impression 20 solidaires du bâti font face à un papier thermosensible formant le support d'impression 21 appliquée sur le rouleau 22. La ou chaque tête 20 est, par exemple, une tête d'impression thermique portant des éléments chauffants connectés à des circuits permettant, comme connu en soi, de les alimenter sélectivement.

La figure 5 représente de façon très schématique l'agencement du système d'alimentation en papier 21. Un rouleau débiteur 41 dévide le papier d'une bobine 42, qui passe autour du rouleau d'appui 22 au contact de la tête d'impression thermique 20. Le rouleau 41 est libre en rotation sur son axe 44.

Le papier 21 s'enroule partiellement, le long d'un arc de cercle, autour du rouleau 22, dont la surface externe est antidérapante, sous l'effet de la tête 20 qui applique le papier contre la surface antidérapante selon une génératrice 47. Le rouleau 41 est logé en dessous du rouleau 22 tandis que la génératrice de contact 47 est sensiblement à la partie supérieure du rouleau 22 ce qui assure un arc de contact suffisant entre le papier 21 et le rouleau 22 pour permettre à ce dernier d'entraîner le papier, le brin imprimé 21b s'échappant librement à la partie supérieure de l'imprimante comme représenté sur la figure. Ainsi l'impression est effectuée par les éléments chauffants de la tête qui sont au contact du papier le long de la génératrice de contact tangentiel 47 de la tête. A la fin de l'impression d'une ligne, la rotation d'un pas du rouleau 22 fait avancer longitudinalement le papier à la ligne suivante (sens de la flèche 45).

La surface du rouleau est revêtue d'un matériau de friction du type polyuréthane ou néoprène, par exemple. L'adhérence entre le papier 21 et la surface du rouleau 22 empêche le papier de se déplacer transversalement, parallèlement à l'axe de ce rouleau en l'absence de rotation de ce dernier, condition nécessaire d'un bon alignement longitudinal sur le papier des marques imprimées dans la même position d'une ligne à l'autre. Du fait de cette adhérence, le papier peut également suivre tout déplacement axial du rouleau de faible amplitude sans se déplacer le long de la surface de celui-ci.

La came 15 a deux sections possédant un profil (fig. 3) en forme de vis sans fin (sections 27b et 29b) et vient en prise avec une roue dentée 23 d'axe parallèle à celui du rouleau. La roue dentée 23 est solidaire en rotation du rouleau 22 par l'intermédiaire d'un pignon à denture parallèle à son axe 24, de même axe que la roue 23, et d'une roue dentée 25 fixée à proximité d'une extrémité de l'arbre 26 du rouleau 22. Le pignon 24 a une longueur suffisante pour rester constamment en prise avec la roue 25 durant le course axiale du rouleau 22.

Le disque 16, l'excentrique 18 et la bielle 17 forment un système bielle-manivelle dans un plan horizontal contenant l'axe du rouleau 22. Ce dernier est animé d'un mouvement rectiligne transversal alternatif sous la commande du système bielle-manivelle. Plus précisément, le rouleau coulisse dans les paliers 26a dans un mouvement de translation alternative en exécutant dans chaque sens, au moins un pas de longueur prédéterminée en réponse à un pas de rotation de l'arbre de sortie du moteur 10.

Le disque 16 exécute un tour complet en réponse à un nombre pair de pas du moteur 10. Ce nombre est de six dans l'exemple illustré (fig. 2) et l'excentrique s'arrête successivement dans six positions d'arrêt prédéterminées P1, P2, P3, P4, P5, P6, réparties régulièrement autour de l'axe vertical de l'arbre 12. Deux positions voisines sont espacées d'un angle A. Les six positions d'arrêt sont disposées symétriquement par rapport au plan diamétral du disque 16 contenant l'axe du rouleau 22 de part et d'autre de ce plan. Ainsi, les positions P1 et P6 correspondent, pour le rouleau 22, à une même position par rapport aux têtes 20. Il en est de même pour les positions P3 et P4 et les positions P2 et P5. Il existe donc trois positions d'arrêt du rouleau 22 au cours de son mouvement transversal par rapport aux têtes 20 dans un sens coïncidant avec trois positions correspondantes d'arrêt au cours du mouvement transversal dans l'autre sens. Le rouleau accomplit donc deux pas dans un sens suivis d'une inversion et deux dans l'autre sens et ainsi de suite. La commande d'impression est prévue de façon connue pour déclencher une impression éventuelle dans chacune de ces positions d'arrêt.

La came 15 est un cylindre à section circulaire qui porte, sur sa paroi périphérique, deux dentures 27 et 29. La denture 27 est formée (fig. 3) d'un arc de cercle supérieur horizontal 27a raccordé par une portion inclinée 27b à un arc de cercle horizontal inférieur 27c. La denture 29 est formée par un arc de cercle supérieur horizontal 29a raccordé par une portion inclinée 29b à un arc de cercle inférieur horizontal 29c. Les arcs 29a et 29c s'étendent à l'extérieur du secteur angulaire S1 contenent la rampe hélicoïdale 27b; de même, les arcs 27a et 27c s'étendant à l'extérieur du secteur angulaire S2 contenant la rampe hélicoïdale 29b. Les secteurs S1, S2 ont un angle égal à A.

La position angulaire fixe de la came 15 par rapport au disque 16 est déterminée de manière que les secteurs S1, S2 occupent, par rapport à l'axe vertical de l'arbre 12, les mêmes positions angulaires que les secteurs P1—P6 et P3—P4.

Enfin, la came 15 et la roue dentée 23 sont disposées de manière qu'en dehors des portions 27b et 29b, les deux dentures 27 et 29 engrènent simultanément avec la roue 23, leur profil horizontal empêchant toute rotation de celle-ci entre les positions S1 et S2 de la came 15.

Le fonctionnement du dispositif d'entraînement découle de ce qui précède.

L'excentrique étant dans la position P1, un pas du moteur 10 le fait passer dans la position P2. Au pas suivant du moteur, l'excentrique 18 arrive dans la position P3. Le moteur accomplissant un pas supplémentaire, l'excentrique passe de la position P3 à la position P4: le rouleau 22 parvient à une limite de son déplacement rectiligne alternatif puis revient dans l'autre sens pour s'arrêter dans la position qu'il occupait lorsque l'excentrique 18 était dans la position P3; simultanément, la rampe 29b, provoque la rotation d'un pas de la roue 23 et, par là-même, entraîne l'avance du rouleau 22 d'un pas de rotation. Les deux pas suivants du moteur 10 font passer l'excentrique de la position P6 à la position P1: le rouleau 22 parvient à l'autre limite de son déplacement et revient dans la position qu'il a quittée; simultanément, la rampe 27b de la came 27 fait accomplir un nouveau pas d'avance au rouleau 22. Pendant les déplacements P1 à P3 via P2, d'une part, et P4 à P6 via P5, d'autre part, les dents 27a, 29a et 27c, 29c respectivement empêchent la rotation de la roue 23 et donc du rouleau 22.

A chaque fois que le rouleau 22 s'arrête après un pas du moteur 10, les éléments d'impression portés par ces têtes sont sélectivement excités pour imprimer des marques à des emplacements commandés le long de la ligne correspondante sur le papier. Pour l'impression de chaque ligne, le rouleau 22 accomplit donc deux pas parallèlement à l'axe du rouleau occupant tour à tour trois positions stationnaires vis à vis de la tête d'impression, pendant lesquelles a lieu une impression. Le sens de ces pas transversaux par rapport à la tête s'inverse entre chaque ligne et la suivante.

Bien entendu, ce nombre de pas peut être inférieur ou supérieur à deux, selon le nombre de pas nécessaire pour faire accomplir un tour complet à l'excentrique 18. Ce dernier est déterminé par le rapport de transmission des pignons 13, 14.

Comme il a été expliqué précédemment, le contact entre la papier 21 et le rouleau 22 est suffisant pour que le papier se déplace transversalement au contact de la tête 20 (flèche 50 sur la fig. 6) en suivant les déplacements axiaux de faible amplitude du rouleau et sans que la bobine 45 subisse de déplacement correspondant. Le brin 21a du papier entre le rouleau 22 et la bobine débitrice 42 n'est pas soumis à une tension et son débattement angulaire dans le plan du papier est suffisamment faible pour éviter que le papier ne glisse latéralement sur le rouleau ou ne se déchire.

Dans l'exemple décrit, la course axiale totale du rouleau 22 dans chaque sens est de 0,288 mm et comporte trois position d'arrêt, l'intervalle séparant deux positions adjacentes étant de 0,125 mm. Selon les réalisations, le mouvement peut êtr obtenu pour une bande de papier dont la largeur peut aller par exemple de 57 mm à 220 mm suivant le type d'imprimante auquel il est appliqué, les imprimantes à peigne rencontrées couramment à l'heure actuelle dans le domaine thermique pouvant comporter de 20 à 80 colonnes de caractères alphanumériques. Il est bien entendu cependant que l'invention n'est pas limitée à ce type d'imprimante ou à des imprimantes alphanumériques, mais peut s'appliquer aux dispositifs de reproduction en facsimilé ou autres.

Si l'on se réfère à la figure 6, les faibles déplacements transversaux du papier par rapport au rouleau qui pourraient éventuellement se produire pendant la rotation de ce dernier sont contrôlés par l'existence d'un flasque 48 traversé par l'axe 26 du rouleau 22. La face interne 49 de ce flasque est perpendiculaire à l'arbre 26 et espacée du flanc latéral 22a du rouleau 22 qui lui fait face d'un intervalle variable. Cet intervalle est tel qu'à l'extrémité de la course axiale du rouleau 22 (flèche 50) vers le flasque 48, la position de la

face 22*a* soit très proche de ce flasque. Dans cette position, le bord latéral 21*c* du papier 21 peut venir en butée contre la face 49 du flasque, s'il a tendance à se déplacer transversalement par rapport au rouleau 22 lors de la rotation de celui-ci d'une ligne à l'autre. Le papier se trouve donc périodiquement recalé transversalement par rapport au rouleau en fin de course transversale de celui-ci, et par conséquent au moment de sa rotation, de façon à conserver un bon alignement longitudinal des marques inscrites par chaque élément du peigne dans des positions correspondantes d'une ligne à l'autre.

On notera que l'utilisation d'un seul moteur entraînant uniquement le rouleau, comme décrit ci-dessus, permet une réalisation des têtes non conditionnée par la nécessité de leur déplacement, une réduction de l'encombrement, un bon synchronisme des mouvements transversal et d'avance et une bonne utilisation du couple moteur. De plus, le moteur pas à pas tourne toujours dans le même sens, ce qui permet d'éliminer l'influence du jeu électrique, le rotor de moteur pas à pas ayant toujours tendance à prendre un retard par rapport à la position angulaire théorique à couple résistant nul.

Un mode particulier de réalisation de la liaison entre l'arbre vertical 12 et l'arbre 26 du rouleau 22 est illustré par la figure 4.

L'excentrique 18 est un ergot situé à l'extrémité supérieure du disque 16. La biellette 17, réalisée en une matière plastique présentant une certaine flexibilité telle que le matériau commercialisé sous le nom de DELRIN, présente, à son extrémité 17*a*, un logement 30 d'axe vertical 56 pour l'ergot 18. A son autre extrémité, la biellette 17 comporte un palier à billes 31 d'axe horizontal dans lequel peut être logée une gorge 32 pratiquée à l'extrémité de l'arbre 26. Le corps de la biellette 17 présente une branche horizontale 55 s'étendant perpendiculairement à l'axe 56 du logement 30. Cette branche horizontale présente un étranglement 57 vers son extrémité opposée au logement 30. A cette extrémité vient se raccorder une branche verticale de la biellette 17 dans laquelle est logé le palier à billes 31. Ainsi, l'arbre 26 et la biellette 17 sont solidarisés en direction transversale et non en rotation autour de l'axe de l'arbre. Les débattements angulaires horizontaux de la branche 55 de part et d'autre du plan vertical passant par l'axe 59 du rouleau 22 sont autorisés par la déformation de la partie étranglée 57 formant pivot, tandis que la branche 58 est déplacée en va-et-vient perpendiculairement à son plan.

Bien entendu, d'autres modifications ou adjonctions pourront être apportées aux modes de réalisation décrits plus haut d'un dispositif d'entraînement conforme à l'invention sans pour cela sortir du cadre de protection défini par les revendications annexées.

Ainsi, comme déjà mentionné, le mouvement transversal du rouleau pourra être un mouvement alternatif continu, l'impression étant réalisée à la volée.

En outre, le dispositif conforme à l'invention peut être utilisé avec des systèmes d'impression autres que thermiques: par exemple des systèmes d'impression par percussion, chimiques, ...

Enfin, d'autres moyens mécaniques pourront être utilisés pour décomposer le mouvement de rotation du moteur en mouvement transversal rectiligne et en mouvement d'avance intermittent.

## Revendications

1. Dispositif d'impression du type comportant:
   — un bâti;
   — un rouleau sur lequel peut être appliqué un support d'impression, ce rouleau étant monté rotatif sur le bâti autour d'un axe de direction transversale par rapport au support d'impression, et la rotation du rouleau autour de cet axe provoquant l'avancement longitudinal du support d'impression;
   — une tête d'impression comportant une pluralité d'éléments d'impression alignés dans une direction sensiblement parallèle à l'axe du rouleau et destinés à être appliqués sur le support d'impression, lui-même appliqué contre le rouleau;
   — des moyens moteurs;
   — un mécanisme bielle-manivelle dont la manivelle est entraînée par le moyens moteurs sur une trajectoire circulaire, et dont la bielle produit un mouvement relatif transversale de translation du rouleur, le long de son axe, par rapport à la tête d'impression, afin de permettre l'impression de plusieurs marques par un même élément en des positions transversales distinctes le long d'une ligne du support d'impression;
   — des moyens d'avancement du support d'impression actionnés par les moyens moteurs pour entraîner le rouleau en rotation; et
   — des moyens de synchronisation pour commander l'actionnement des moyens d'avancement du support d'impression en synchronisme avec l'entraînement du mécanisme bielle-manivelle afin de ne commander la rotation du rouleau qu'à la fin de l'impression d'une ligne sur le support d'impression, caractérisé en ce que la manivelle (16; 18) adopte, à chaque tour, un nombre pair de positions angulaires particulières (P1 à P6), régulièrement espacées les unes des autres et définissant des positions transversales relatives du rouleau (22) par rapport à la tête d'impression (20) pour chaque desquelles une impression peut être effectuée, en ce que ces position angulaires particulières (P1 à P6) sont disposées, de façon symétrique, de part et d'autre d'un plan qui est à la fois diamétral pour ladite trajectoire circulaire et parallèle à la direction dudit mouvement de translation, et en ce que les moyens de synchronisation (15, 23, 24) ne commandent la rotation du rouleau qu'au cours de chacun des intervalles de temps pendant lesquels la manivelle passe d'une desdites positions angulaires particulières (P3 ou P6) à une position angulaire particulière voisine (P4 ou P1) en traversant ledit plan diamétral.

2. Dispositif suivant la revendication 1, caractérisé en ce que lesdites positions angulaires particulières sont au nombre de six, de sorte que, pour chaque ligne d'impression, le rouleau (22) prend relativement à la tête d'impression (20) successivement trois positions transversales relatives régulièrement espacées.

3. Dispositif suivant la revendication 1 ou 2, caractérisé en ce que lesdits moyens moteurs sont constitués par un unique moteur rotatif pas à pas (11) susceptible d'adopter des positions d'arrêt angulairement espacées les unes des autres de façon régulière et dont le mouvement est directement transmis à la manivelle, et en ce que lesdites positions angulaires particulières de la manivelle sont des positions d'arrêt correspondant aux positions d'arrêt du moteur (11).

4. Dispositif suivant l'une quelconque des revendications précédentes, caractérisé en ce que lesdits moyens de synchronisation (15, 23, 24) comprennent essentiellement une came rotative (15) liée en rotation à la manivelle (16, 18) et une roue dentée (23) liée en rotation au rouleau (22), la came (15) présentant des dentures (27, 29) engrenant avec la roue dentée, les dentures présentant au moins un secteur angulaire à profil de vis sans fin à pas non nul (27b ou 29b) et un secteur angulaire voisin à pas nul (27a, 29c ou 29a, 27c), et chaque secteur à profil de vis sans fin étant angulairement déterminé pour ne venir en prise avec la roue dentée et l'entraîner que lorsque la manivelle se trouve entre deux de ses positions angulaires particulières qui sont voisines et disposées de part et d'autre dudit plan diamétral.

5. Dispositif suivant l'une quelconque des revendications précédentes, caractérisé en ce que la surface du rouleau est constituée par un matériau antidérapant.

6. Dispositif suivant l'une quelconque des revendications précédentes, notamment du type dans lequel la tête d'impression est du type thermique, caractérisé en ce que le support d'impression est appliqué contre la surface du rouleau par appui de la tête d'impression.

7. Dispositif suivant l'une des revendications précédentes, caractérisé en ce que le support d'impression est une bande débitée par une bobine débitrice, des moyens permettant de maintenir cette bande enroulée partiellement autour dudit rouleau pour la solidariser en mouvement longitudinal et transversal.

8. Dispositif suivant l'une des revendications précédentes, caractérisé par des moyens de recalage (48) transversal du support d'impression par rapport au rouleau à une extrémité au moins de la course de celui-ci.

## Patentansprüche

1. Druckvorrichtung folgenden Typs:
— mit einem Maschinenrahmen;
— mit einer Walze, auf die ein Druckträger aufgelegt werden kann, wobei diese Walze in diesem Maschinenrahmen drehbar um eine Achse gelagert ist, dessen Richtung transversal zu dem Druckträger ist, wobei die Drehung der Walze um diese Achse den Vorschub des Druckträgers in Längsrichtung verursacht;
— mit einem Druckkopf, der eine Mehrzahl von Druckelementen aufweist, die im wesentlichen parallel zur Achse der Walse ausgerichtet sind und dazu bestimmt sind, gegen den Druckträger angelegt zu werden, der seinerseits gegen die Walze angelegt ist;
— mit Antriebsmitteln;
— mit einem Pleuel-Kurbel-Mechanismus, dessen Kurbel durch die Antriebsmittel auf einer Kreisbahn angetrieben wird und dessen Pleuel eine transversale relative Translationsbewegung der Walze längs ihrer Achse in bezug auf den Druckkopf erzeugt, um das Aufdrucken mehrerer Abdrucke durch dasselbe Element an unterschiedlichen Transversalstellen längs einer Zeile des Druckträgers zu ermöglichen;
— mit Vorschubmitteln für den Vorschub des Druckträgers, die durch die Antriebsmittel betätigt werden, um die Walze in Drehung zu versetzen; und
— mit Synchronisationsmitteln zur Steuerung der Betätigung der Vorschubmittel des Druckträgers synchron mit dem Antrieb des Pleuel-Kurbel-Mechanismus, um die Drehung der Walze erst am Ende des Druckens einer Zeile auf dem Druckträger hervorzurufen,
dadurch gekennzeichnet, daß die Kurbel (16, 18) bei jeder Umdrehung eine geradzahlige Anzahl von besonderen Winkelstellungen (P1 bis P6) einnimmt, die regelmäßig voneinander beabstandet sind und relative Transversalstellungen der Walze (22) in bezug auf den Druckkopf (20) definieren, für jede von welchen ein Druckvorgang ausgeführt werden kann, daß diese besonderen Winkelstellungen (P1 bis P6) symmetrisch auf beiden Seiten einer Ebene liegen, die sowohl für die genannte Kreisbahn diametral als auch zur Richtung der genannten Translationsbewegung parallel ist, und daß die Synchronisationsmittel (15, 23, 24) die Drehung der Walze nur während jedes Zeitintervalls bewirken, währenddessen die Kurbel von einer der genannten besonderen Winkelstellungen (P3 oder P6) in eine benachbarte besondere Winkelstellung (P4 oder P1) gelangt, indem sie die genannte diametrale Ebene durchquert.

2. Vorrichtung nach Anspruch 1, dadurch gekennzeichnet, daß eine Anzahl von sechs der besonderen Winkelstellungen vorgesehen ist, so daß die Walze (22) für jede Druckzeile relativ zu dem Druckkopf (20) nacheinander drei transversale Relativpositionen einnimmt, die regelmäßig voneinander beabstandet sind.

3. Vorrichtung nach Anspruch 1 oder 2, dadurch gekennzeichnet, daß die Antriebsmittel durch einen einzigen, drehenden Schrittmotor (11) gebildet sind, der Anhaltestellungen einnehmen kann, die voneinander regelmäßige Winkelabstände haben, wobei die Bewegung von diesem Motor direkt auf die Kurbel übertragen wird, und daß die genannten besonderen Winkelstellungen der Kurbel Anhaltepositionen sind, die den Anhaltestellungen des Motors (11) entsprechen.

4. Vorrichtung nach einem der vorstehenden Ansprüche, dadurch gekennzeichnet, daß die Synchronisationsmittel (15, 23, 24) im wesentlichen einen drehbaren, drehfest mit der Kurbel (16, 18) verbundenen Nocken (15) und ein Zahnrad (23) umfassen, das drehfest mit der Walze (22) verbunden ist, wobei der Nocken (15) Zahnelemente (27, 29) aufweist, die mit dem Zahnrad kämmen, wobei diese Zahnelemente wenigstens einen Winkelsektor (27*b* oder 29*b*) mit dem Profil einer endlosen Schraube mit nicht verschwindender Steigung und einen benachbarten Winkelsektor (27*a*, 29*c* oder 29*a*, 27*c*) mit verschwindender Steigung aufweisen, und wobei jeder Sektor mit dem Profil einer endlosen Schraube winkelmäßig so bestimmt ist, daß er mit dem Zahnrad nur dann in Eingriff kommt und dieses antreibt, wenn die Kurbel sich zwischen zwei ihrer besonderen Winkelstellungen befindet, die benachbart sind und auf beiden Seiten der genannten diametralen Ebene liegen.

5. Vorrichtung nach einem der vorherstehenden Ansprüche, dadurch gekennzeichnet, daß die Oberfläche der Walze aus einem Antigleitmittel gebildet ist.

6. Vorrichtung nach einem der vorherstehenden Ansprüche, insbesondere desjenigen Typs, bei dem der Druckkopf ein Thermodruckkopf ist, dadurch gekennzeichnet, daß der Druckträger durch Andrücken des Druckkopfes gegen die Walzenoberfläche angelegt wird.

7. Vorrichtung nach einem der vorherstehenden Ansprüche, dadurch gekennzeichnet, daß der Druckträger ein Streifen ist, der von einer Vorratsrolle abgegeben wird, wobei Mittel vorgesehen sind, die es gestatten, diesen Streifen teilweise um die Walze herum gewunden zu halten, um ihn damit in Längs- und Transversalbewegung mitzunehmen.

8. Vorrichtung nach einem der vorstehenden Ansprüche, gekennzeichnet durch Mittel (48) zum transversalen Neufestlegen des Druckträgers bezüglich der Walze an wenigstens einem Ende des Hubes derselben.

**Claims**

1. Printer of the type comprising:
— a frame;
— a platen on which a recording material can be supported, this platen being rotatably mounted in the frame on an axis transverse to the recording material, and the rotation of the platen about this axis causing longitudinal forward movement of the recording material;
— a printhead comprising a plurality of printing elements which are aligned in a direction substantially parallel to the axis of the platen, and are arranged to be applied to the recording material, itself supported against the platen;
— motor means;
— a crank and connecting rod mechanism in which the crank is driven by the motor means along a circular trajectory, and in which the connecting rod produces relative transverse translational movement of the platen, along its axis, with reference to the printhead, in order to enable the printing of several marks by the same element at distinct transverse positions along a line on the recording material;
— means for advancing the recording material actuated by the motor means to rotate the platen; and
— synchronising means to control the operation of the means for advancing the recording material in synchronism with the drive to the crank and connecting rod mechanism in order to cause rotation of the platen only at the end of printing of a line on the recording material, characterised in that the crank (16, 18) adopts, in each revolution, an even number of predetermined angular positions (P1 to P6), regularly spaced one from another and defining relative transverse positions of the platen (22) with reference to the printhead (20) for each of which printing can be effected, in that these predetermined angular positions (P1 to P6) are disposed, in a symmetrical manner, on either side of a plane which is both diametric for the said circular trajectory and parallel to the direction of the said translational movement, and in that the synchronising means (15, 23, 24) causes rotation of the platen only during each of the intervals of time in which the crank passes from one of the said predetermined angular positions (P3 or P6) to an adjacent predetermined angular position (P4 or P1) while traversing the said diametric plane.

2. Printer according to claim 1, characterised in that the said predetermined angular positions are six in number, such that, for each line of printing, the platen (22) successively adopts three relative regularly spaced transverse positions with reference to the printhead (20).

3. Printer according to claim 1 or claim 2, characterised in that the said motor means comprises a single stepping motor (11) arranged to adopt rest positions angularly spaced one from another in a regular manner and the movement of which is directly coupled to the crank, and in that the said predetermined angular positions of the crank are rest positions corresponding to the rest positions of the motor (11).

4. Printer according to any one of the preceding claims, characterised in that the said synchronising means (15, 23, 24) essentially comprises a rotary cam (15) rotatively connected to the crank (16, 18) and a toothed wheel (23) rotatively connected to the platen (22), the cam (15) having teeth (27, 29) engaging with the toothed wheel, the teeth having at least one angular sector with an endless screw profile of non-zero pitch (27*b* or 29*b*) and an adjacent angular sector of zero pitch (27*a*, 29*c*, or 29*a*, 27*c*), and each sector with an endless screw profile being angularly disposed to come into contact with the toothed wheel and drive it only when the crank is between two of its predetermined angular positions which are adjacent and located on either side of the said diametric plane.

5. Printer according to any one of the preceding claims, characterised in that the surface of the platen comprises a non-skid material.

6. Printer according to any one of the preceding claims, notably of the type in which the printhead is of the thermal type, characterised in that the recording material is urged against the surface of the platen by pressure from the printhead.

7. Printer according to any one of the preceding claims, characterised in that the recording material is a band supplied from a supply bobbin, with means enabling this band to be maintained partially wound around the said platen to secure it for longitudinal and transverse movement.

8. Printer according to any one of the preceding claims, characterised by means for transverse repositioning of the recording material relative to the platen at one extreme at least of the movement thereof.

Fig.1

Fig.2

Fig.3

**Fig. 4**

**Fig. 5**

**Fig. 6**